# EUROPEAN PATENT APPLICATION

(11) **EP 4 765 315 A1**
(43) Date of publication of application: **24.06.2026**
(21) Application number: 25833312.9
(22) Date of filing: 27.06.2025
(51) Int. Cl.: H01M 10/42, H01M 4/525, H01M 4/505, H01M 4/1391, H01M 10/052, H01M 4/02

(54) **POSITIVE ELECTRODE SLURRY COMPOSITION, POSITIVE ELECTRODE, AND LITHIUM SECONDARY BATTERY COMPRISING SAME**

(30) Priority: 03.07.2024 KR 20240087858; 26.06.2025 KR 20250085515
(71) Applicant: LG Energy Solution, Ltd., Seoul 07335 (KR)
(72) Inventor: JI, Su Hyeon, Daejeon 34122 (KR); YEOM, Chul Eun, Daejeon 34122 (KR); LEE, Jung Min, Daejeon 34122 (KR); KO, Jin Hyuck, Daejeon 34122 (KR); LEE, Chul Haeng, Daejeon 34122 (KR)
(74) Representative: Hoffmann Eitle
(86) International application number: PCT/KR2025/009087
(87) International publication number: WO 2026/010253

(57) **Abstract**

The present invention relates to a positive electrode slurry composition, a positive electrode, and a lithium secondary battery including the same, and particularly to a positive electrode slurry composition for a lithium secondary battery which is characterized by including a positive electrode active material, a film-forming additive, and a solvent, wherein the film-forming additive is a compound represented by Formula 1, a positive electrode for a lithium secondary battery, and a lithium secondary battery including the same.

## Description

### TECHNICAL FIELD

### Cross-reference to Related Applications

This application claims priority from Korean Patent Application Nos. 10-2024-0087858, filed on July 3, 2024, and 10-2025-0085515, filed on June 26, 2025, the disclosures of which are incorporated by reference herein.

### Technical Field

The present disclosure relates to a positive electrode slurry composition, a positive electrode, and a lithium secondary battery in which gas generation caused by a side reaction between the positive electrode and an electrolyte solution is reduced by including the same.

### BACKGROUND

Demand for secondary batteries as an energy source has been significantly increased as technology development and demand with respect to mobile devices have increased, and among these secondary batteries, lithium secondary batteries having high energy density, high operating potential, long cycle life, and low self-discharging rate have been commercialized and widely used.

A high operating voltage is required to achieve high energy density as an application range of the lithium secondary batteries expands to include not only portable power sources for mobile phones, notebook computers, digital cameras, and camcorders, but also medium and large sized power sources for power tools, electric bicycles, hybrid electric vehicles (HEVs), and plug-in hybrid electric vehicles (plug-in HEVs, PHEVs).

However, in a case in which the lithium secondary battery is continuously operated under high voltage, since an electrolyte solution is not only depleted due to an oxidative decomposition reaction of a positive electrode and an electrolyte, but problems, such as gas generation due to a side reaction of the electrolyte solution and dissolution of transition metals from the positive electrode, also occur as a passivation film on a surface of the electrode collapses, long-life performance of the battery is degraded. These problems are intensified or accelerated by an exothermic reaction that occurs during battery operation.

Thus, there is a need to develop a lithium secondary battery which may achieve high energy density by suppressing the gas generation due to the side reaction of the electrolyte solution and the dissolution of the transition metals from the positive electrode by forming a stable passivation film on the surface of the electrode during high-voltage operation.

### DISCLOSURE OF THE INVENTION

### TECHNICAL PROBLEM

An aspect of the present disclosure provides a positive electrode slurry composition including a compound capable of forming a highly durable film on a surface of a positive electrode.

Also, another aspect of the present disclosure provides a positive electrode including a compound capable of forming a highly durable film on the surface of the positive electrode.

Furthermore, another aspect of the present disclosure provides a lithium secondary battery including the above-described positive electrode.

### TECHNICAL SOLUTION

[1] The present disclosure provides a positive electrode slurry composition for a lithium secondary battery which includes a positive electrode active material, a film-forming additive, and a solvent, wherein the film-forming additive is a compound represented by Formula 1. 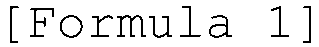 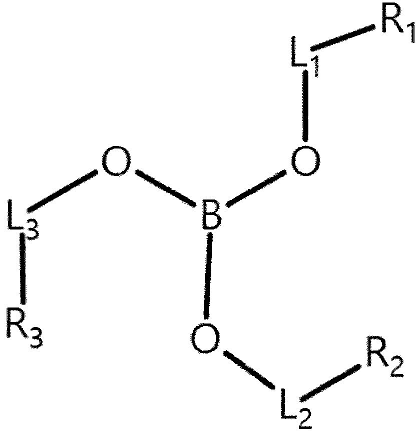 In Formula 1,
   L₁, L₂, and L₃ are each independently a direct bond or an alkylene group having 1 to 10 carbon atoms, R₁ and R₂ are each independently an alkenyl group having 2 to 7 carbon atoms or an alkynyl group having 2 to 7 carbon atoms, R₃ is an alkyl group having 1 to 5 carbon atoms or an alkenyl group having 2 to 7 carbon atoms, and when both R₁ and R₂ are alkynyl groups having 2 to 7 carbon atoms, R₃ is an alkyl group having 1 to 5 carbon atoms.
[2] The present disclosure provides the positive electrode slurry composition for a lithium secondary battery of [1] above, wherein, in Formula 1, L₁, L₂, and L₃ are each independently a direct bond or an alkylene group having 1 to 5 carbon atoms, R₁ and R₂ are each independently an alkenyl group having 2 to 5 carbon atoms or an alkynyl group having 2 to 5 carbon atoms, and R₃ is an alkyl group having 1 to 4 carbon atoms or an alkenyl group having 2 to 5 carbon atoms.
[3] The present disclosure provides the positive electrode slurry composition for a lithium secondary battery of [1] or [2] above, wherein, in Formula 1, L₁, L₂, and L₃ are each independently an alkylene group having 1 to 3 carbon atoms, R₁ and R₂ are each independently an alkenyl group having 2 to 5 carbon atoms, and R₃ is an alkenyl group having 2 to 5 carbon atoms.
[4] The present disclosure provides the positive electrode slurry composition for a lithium secondary battery of at least one of [1] to [3] above, wherein, in Formula 1, L₁, L₂, and L₃ are each independently an alkylene group having 1 to 3 carbon atoms, R₁ and R₂ are each independently an alkenyl group having 2 to 4 carbon atoms, and R₃ is an alkenyl group having 2 to 4 carbon atoms.
[5] The present disclosure provides the positive electrode slurry composition for a lithium secondary battery of at least one of [1] to [4] above, wherein, in Formula 1, L₁, L₂, and L₃ are each independently an alkylene group having 1 to 3 carbon atoms, R₁ and R₂ are each independently an alkynyl group having 2 to 5 carbon atoms, and R₃ is an alkyl group having 1 to 3 carbon atoms.
[6] The present disclosure provides the positive electrode slurry composition for a lithium secondary battery of at least one of [1] to [5] above, wherein, in Formula 1, L₁, L₂, and L₃ are a direct bond or an alkylene group having 1 to 3 carbon atoms, R₁ and R₂ are an alkynyl group having 2 to 4 carbon atoms, and R₃ is an alkyl group having 1 to 3 carbon atoms.
[7] The present disclosure provides the positive electrode slurry composition for a lithium secondary battery of at least one of [1] to [6] above, wherein the compound represented by Formula 1 is any one of compounds represented by Formulae 1A to 1E. 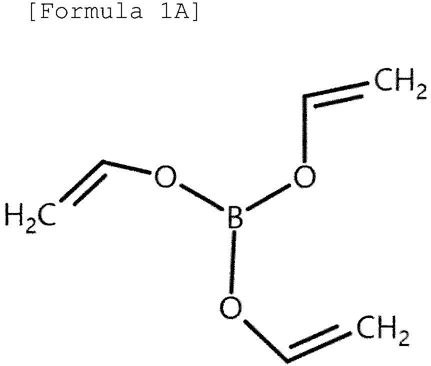 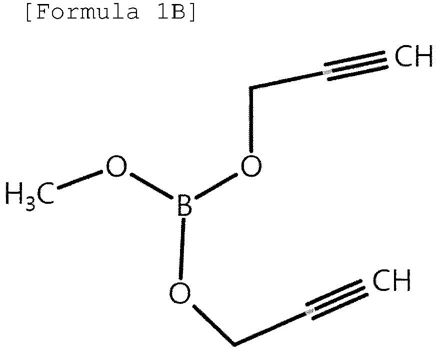 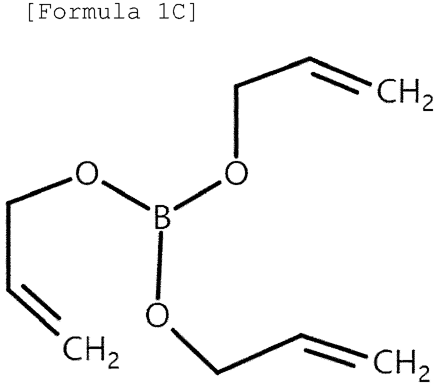 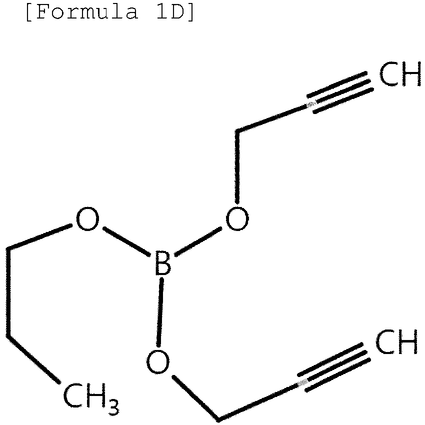 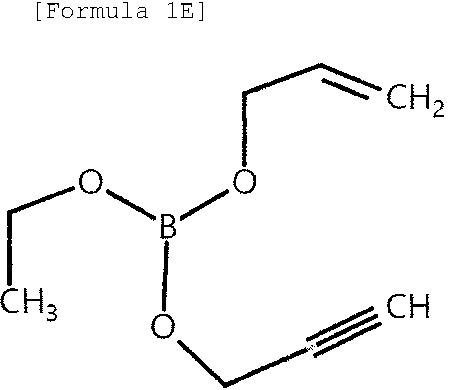
[8] The present disclosure provides the positive electrode slurry composition for a lithium secondary battery of at least one of [1] to [7] above, wherein the film-forming additive is included in an amount of 0.01 wt% to 10 wt% based on a total weight of a solid content of the positive electrode slurry composition.
[9] The present disclosure provides the positive electrode slurry composition for a lithium secondary battery of at least one of [1] to [8] above, wherein the film-forming additive is included in an amount of 0.01 wt% to 8 wt% based on a total weight of a solid content of the positive electrode slurry composition.
[10] The present disclosure provides the positive electrode slurry composition for a lithium secondary battery of at least one of [1] to [9] above, wherein the positive electrode active material includes a compound represented by Formula 2.

   [Formula 2] Li₁₊ₐNiₓCo_{y}M¹_{z}M²_{w}O₂

   In Formula 2, M¹ is manganese (Mn), aluminum (Al), or a combination thereof, M² is at least one selected from Al, zirconium (Zr), tungsten (W), titanium (Ti), magnesium (Mg), calcium (Ca), or strontium (Sr), and 0≤a≤0.5, 0<x<1.0, 0<y≤0.4, 0<z≤0.4, and 0≤w≤0.1.
[11] The present disclosure provides the positive electrode slurry composition for a lithium secondary battery of at least one of [1] to [10] above, wherein the positive electrode slurry composition for a lithium secondary battery further includes at least one of a conductive agent, a binder, and a thickener.
[12] The present disclosure provides a positive electrode for a lithium secondary battery which includes a positive electrode material mixture layer including a positive electrode active material and a film-forming additive, wherein the film-forming additive is a compound represented by Formula 1: 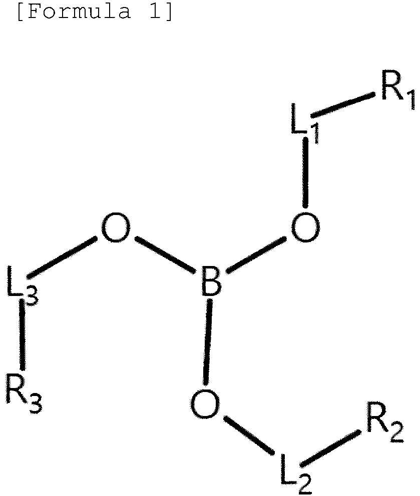 In Formula 1, L₁, L₂, and L₃ are each independently a direct bond or an alkylene group having 1 to 10 carbon atoms, R₁ and R₂ are each independently an alkenyl group having 2 to 7 carbon atoms or an alkynyl group having 2 to 7 carbon atoms, R₃ is an alkyl group having 1 to 5 carbon atoms or an alkenyl group having 2 to 7 carbon atoms, and when both R₁ and R₂ are alkynyl groups having 2 to 7 carbon atoms, R₃ is an alkyl group having 1 to 5 carbon atoms.
[13] The present disclosure provides the positive electrode of [12] above, wherein the positive electrode material mixture layer includes a boron (B)-containing film.
[14] The present disclosure provides a method of preparing a positive electrode for a secondary battery which includes: applying a positive electrode slurry composition onto a positive electrode collector; and forming a positive electrode material mixture layer by drying and rolling the positive electrode slurry composition, wherein the positive electrode slurry composition is the positive electrode slurry composition of claim 1.
[15] The present disclosure provides a lithium secondary battery including the positive electrode of [12] above, a negative electrode facing the positive electrode, a separator, and an electrolyte solution.

### ADVANTAGEOUS EFFECTS

As described above, since a positive electrode slurry composition for a lithium secondary battery according to the present disclosure includes a borate-based compound containing a substituent having a specific structure, it may suppress an oxidative decomposition reaction between a positive electrode and an electrolyte and may prepare the positive electrode including a robust boron-containing film capable of suppressing oxygen desorption from the positive electrode.

Also, since a positive electrode for a lithium secondary battery according to the present disclosure includes the borate-based compound containing the substituent having a specific structure, it may suppress the oxidative decomposition reaction between the positive electrode and the electrolyte by forming the robust boron-containing film on a surface of the positive electrode.

Furthermore, a lithium secondary battery including the above positive electrode may effectively improve electrochemical performance, such as high-temperature life characteristics and high-temperature storage performance, by suppressing gas generation and dissolution of transition metals from the positive electrode during operation.

### DETAILED DESCRIPTION

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

Hereinafter, the present disclosure will be described in detail.

A positive electrode slurry composition for a lithium secondary battery according to the present disclosure, a positive electrode for a lithium secondary battery, a method of preparing a positive electrode, and a lithium secondary battery include at least one of configurations described below, and may include any combination between technically possible configurations among the configurations below.

### Positive Electrode Slurry Composition for Lithium Secondary Battery

A positive electrode slurry composition for a lithium secondary battery according to the present disclosure includes
a positive electrode active material, a film-forming additive, and a solvent, wherein the film-forming additive may be a compound represented by Formula 1 below.

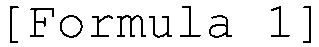

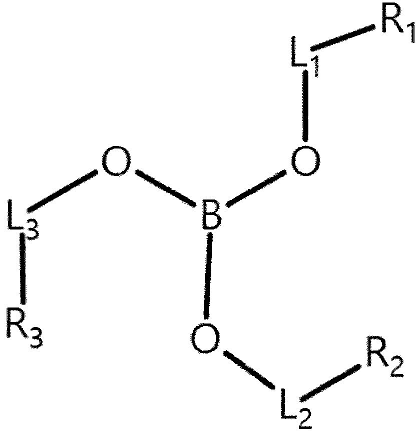

In Formula 1,
L₁, L₂, and L₃ are each independently a direct bond or an alkylene group having 1 to 10 carbon atoms,
R₁ and R₂ are each independently an alkenyl group having 2 to 7 carbon atoms or an alkynyl group having 2 to 7 carbon atoms,
R₃ is an alkyl group having 1 to 5 carbon atoms or an alkenyl group having 2 to 7 carbon atoms, and
when both R₁ and R₂ are alkynyl groups having 2 to 7 carbon atoms, R₃ is an alkyl group having 1 to 5 carbon atoms.

### (1) Positive Electrode Active Material

The positive electrode active material of the present disclosure is a compound capable of reversibly intercalating and deintercalating lithium, wherein the positive electrode active material may specifically include a lithium composite metal oxide including lithium and at least one metal such as cobalt, manganese, nickel, or aluminum.

Specifically, the positive electrode active material may include lithium-cobalt-based oxide (e.g., LiCoO₂, etc.), lithium-manganese-based oxide (e.g., LiMnO₂, LiMn₂O₄, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃Mₛ₂)O₂ (where M is selected from aluminum (Al), iron (Fe), vanadium (V), chromium (Cr), titanium (Ti), tantalum (Ta), magnesium (Mg), titanium (Ti), or molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the positive electrode active material may include at least one selected from lithium-cobalt oxide, lithium-manganese-based oxide, lithium-nickel-manganese-cobalt-based oxide represented by Formula 2 below, or lithium-nickel-cobalt-transition metal (M) oxide.

[Formula 2] Li₁₊ₐNiₓCo_{y}M¹_{z}M²_{w}O₂

In Formula 2,
M¹ is manganese (Mn), aluminum (Al), or a combination thereof,
M² is at least one selected from Al, zirconium (Zr), tungsten (W), titanium (Ti), magnesium (Mg), calcium (Ca), or strontium (Sr), and 0≤a≤0.5, 0<x<1.0, 0<y≤0.4, 0<z≤0.4, and 0≤w≤0.1.
1+a represents an atomic fraction of lithium in the lithium transition metal oxide, wherein a may satisfy 0≤a≤0.5, preferably 0≤a≤0.2, and more preferably 0≤a≤0.1.
x represents an atomic fraction of nickel among total transition metal elements in the lithium transition metal oxide, wherein x may satisfy 0<x<1.0, particularly 0.55<x≤0.98, more particularly 0.6≤x≤0.98, and even more particularly 0.6≤x≤0.95.
y represents an atomic fraction of cobalt among the total transition metal elements in the lithium transition metal oxide, wherein y may satisfy 0<y≤0.4, particularly 0<y≤0.3, and more particularly 0.05≤y≤0.3.
z represents an atomic fraction of M¹ element among the total transition metal elements in the lithium transition metal oxide, wherein z may satisfy 0<z≤0.4, preferably 0<z≤0.3, and more preferably 0.01≤z≤0.3.
w represents an atomic fraction of M² element among the total transition metal elements in the lithium transition metal oxide, wherein w may satisfy 0<w≤0.1, preferably 0<w≤0.05, and more preferably 0<w≤0.02.

Specifically, the positive electrode active material may include a lithium composite transition metal oxide having a Ni content of 0.55 atm% or more based on the total number of metal elements excluding lithium, in order to achieve a high-capacity battery. More specifically, the positive electrode active material may include a lithium composite transition metal oxide such as Li(Ni_{0.6}Mn_{0.2}Co_{0.2})O₂, Li(Ni_{0.6}Mn_{0.3}Co_{0.1})O₂, Li(Ni_{0.7}Mn_{0.13}Co_{0.13})O₂, Li(Ni_{0.7}Mn_{0.2}Co_{0.1})O₂, Li(Ni_{0.8}Mn_{0.1}Co_{0.1})O₂, Li(Ni_{0.8}Co_{0.13}Al_{0.15})O₂, Li(Ni_{0.86}Mn_{0.07}Co_{0.05}Al_{0.02})O₂, or Li(Ni_{0.90}Mn_{0.03}Co_{0.05})O₂.

The positive electrode active material may be included in an amount of 80 wt% to 98 wt%, more specifically, 85 wt% to 98 wt% based on a total weight of a solid content included in the positive electrode slurry composition. When the positive electrode active material is included in an amount within the above range, excellent capacity characteristics may be secured, and excellent flowability, conductivity, or physical properties of the positive electrode slurry composition may be obtained.

### (2) Film-Forming Additive

The positive electrode slurry composition of the present disclosure may include a film-forming additive so that a boron-containing robust film may be formed on a surface of the positive electrode.

The film-forming additive may be a compound represented by Formula 1 below.

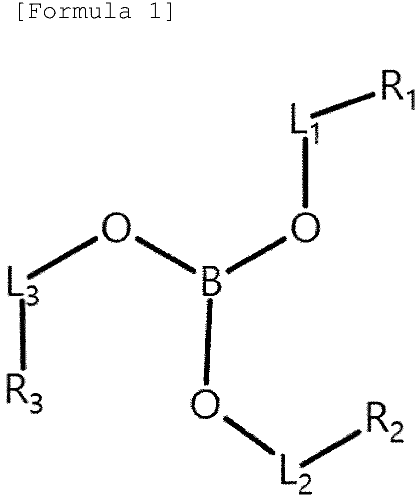

In Formula 1,
L₁, L₂, and L₃ are each independently a direct bond or an alkylene group having 1 to 10 carbon atoms,
R₁ and R₂ are each independently an alkenyl group having 2 to 7 carbon atoms or an alkynyl group having 2 to 7 carbon atoms,
R₃ is an alkyl group having 1 to 5 carbon atoms or an alkenyl group having 2 to 7 carbon atoms, and
when both R₁ and R₂ are alkynyl groups having 2 to 7 carbon atoms, R₃ is an alkyl group having 1 to 5 carbon atoms.

The compound represented by Formula 1 may form a stable film capable of suppressing a side reaction with an electrolyte on the surface of the positive electrode by being directly introduced during a positive electrode coating process together with the positive electrode active material. Particularly, since the compound represented by Formula 1 contains a boron element as a Lewis base in its structure, it may prevent further decomposition of anions, for example, PF₆⁻of a lithium salt and may thereby suppress generation of HF. Also, since oxygen positioned at an α-position of the boron element has a lone electron pair, it may be stably adsorbed onto the positive electrode, and thus, it may form a film with enhanced lithium (Li)-ion characteristics. As described above, the compound represented by Formula 1 may prevent the side reaction at an interface between the positive electrode and the electrolyte, may suppress an oxidative decomposition reaction of the electrolyte, and may suppress oxygen desorption and dissolution of transition metals from the positive electrode active material by forming a robust film on the surface of the positive electrode. Thus, it may effectively improve battery chemical performance, such as high-temperature life characteristics and high-temperature storage performance, of the lithium secondary battery.

In Formula 1, L₁ may be a direct bond or an alkylene group having 1 to 7 carbon atoms, or a direct bond or an alkylene group having 1 to 5 carbon atoms, or an alkylene group having 1 to 3 carbon atoms, or an alkylene group having 1 or 2 carbon atoms. Specifically, L₁ may be a methylene group.

In Formula 1, L₂ may be a direct bond or an alkylene group having 1 to 7 carbon atoms, or a direct bond or an alkylene group having 1 to 5 carbon atoms, or an alkylene group having 1 to 3 carbon atoms, or an alkylene group having 1 or 2 carbon atoms. Specifically, L₂ may be a methylene group.

In Formula 1, L₃ may be a direct bond or an alkylene group having 1 to 7 carbon atoms, or a direct bond or an alkylene group having 1 to 5 carbon atoms, or a direct bond or an alkylene group having 1 to 3 carbon atoms. Specifically, L₃ may be a direct bond or a methylene group.

Also, in Formula 1, R₁ may be an alkenyl group having 2 to 5 carbon atoms or an alkynyl group having 2 to 5 carbon atoms, or an alkenyl group having 2 to 4 carbon atoms or an alkynyl group having 2 to 4 carbon atoms, or an alkenyl group having 2 to 3 carbon atoms or an alkynyl group having 2 to 3 carbon atoms. Preferably, R₁ may be a vinyl group, which is an alkenyl group having 2 carbon atoms, or a propargyl group which is an alkynyl group having 2 carbon atoms.

Furthermore, in Formula 1, R₂ may be an alkenyl group having 2 to 5 carbon atoms or an alkynyl group having 2 to 5 carbon atoms, or an alkenyl group having 2 to 4 carbon atoms or an alkynyl group having 2 to 4 carbon atoms, or an alkenyl group having 2 to 3 carbon atoms or an alkynyl group having 2 to 3 carbon atoms. Preferably, R₂ may be a vinyl group, which is an alkenyl group having 2 carbon atoms, or a propargyl group which is an alkynyl group having 2 carbon atoms.

Also, in Formula 1, R₃ is an alkyl group having 1 to 4 carbon atoms or an alkenyl group having 2 to 5 carbon atoms, or an alkyl group having 1 to 3 carbon atoms or an alkenyl group having 2 to 4 carbon atoms. Specifically, R₃ may be a methyl group, an ethyl group, a propyl group, or a vinyl group which is an alkenyl group having 2 carbon atoms.

Particularly, in Formula 1, when both R₁ and R₂ are alkynyl groups, R₃ may be an alkyl group having 1 to 5 carbon atoms, an alkyl group having 1 to 4 carbon atoms, or an alkyl group having 1 to 3 carbon atoms.

In Formula 1, L₁, L₂, L₃, R₁, R₂, and R₃ may be combined with each other without limitation. Specifically, in Formula 1, L₁, L₂, and L₃ may each independently be a direct bond or an alkylene group having 1 to 5 carbon atoms, R₁ and R₂ may each independently be an alkenyl group having 2 to 5 carbon atoms or an alkynyl group having 2 to 5 carbon atoms, and R₃ may be an alkyl group having 1 to 4 carbon atoms or an alkenyl group having 2 to 5 carbon atoms.

Also, in Formula 1, L₁, L₂, and L₃ may each independently be an alkylene group having 1 to 3 carbon atoms, R₁ and R₂ may each independently be an alkenyl group having 2 to 5 carbon atoms, and R₃ may be an alkenyl group having 2 to 5 carbon atoms.

Furthermore, in Formula 1, L₁, L₂, and L₃ may each independently be an alkylene group having 1 to 3 carbon atoms, R₁ and R₂ may each independently be an alkenyl group having 2 to 4 carbon atoms, and R₃ may be an alkenyl group having 2 to 4 carbon atoms.

Also, in Formula 1, L₁, L₂, and L₃ may each independently be an alkylene group having 1 to 3 carbon atoms, R₁ and R₂ may each independently be an alkynyl group having 2 to 5 carbon atoms, and R₃ may be an alkyl group having 1 to 3 carbon atoms.

Furthermore, in Formula 1, L₁, L₂, and L₃ may be a direct bond or an alkylene group having 1 to 3 carbon atoms, R₁ and R₂ may be an alkynyl group having 2 to 4 carbon atoms, and R₃ may be an alkyl group having 1 to 3 carbon atoms.

More specifically, it is desirable that the compound represented by Formula 1 of the present disclosure includes any one of compounds represented by Formulae 1A to 1E below.

Since the compounds represented by Formulae 1A and 1C contain three double bond terminal groups, they exhibit a lower reaction rate than a compound represented by Formula 3, but may be reduced more stably to form a uniform film. Also, since the compound represented by Formula 1B or 1D contains two triple bond terminal groups, they may control the reaction rate to form a stable and uniform film. Furthermore, the compound represented by Formula 1E may control the reaction rate and may simultaneously form a stable film by containing both a triple bond terminal group and a double bond terminal group in its structure:

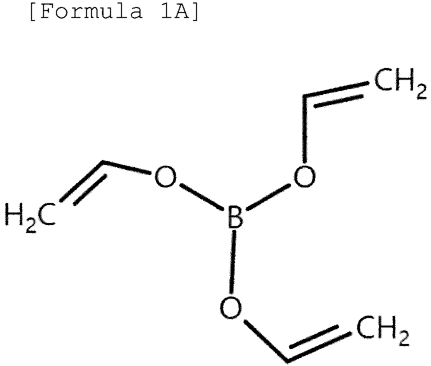

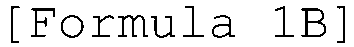

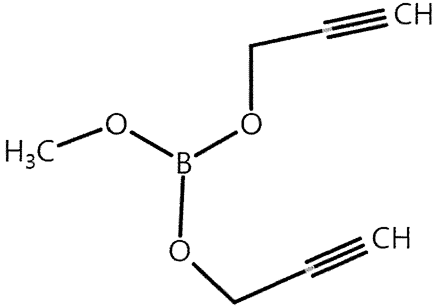

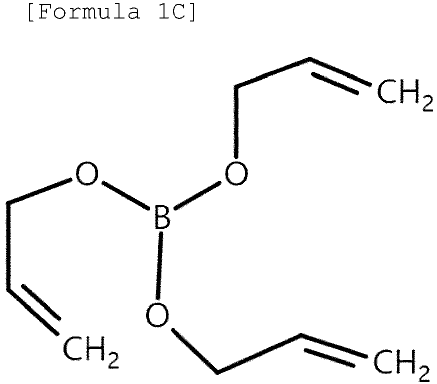

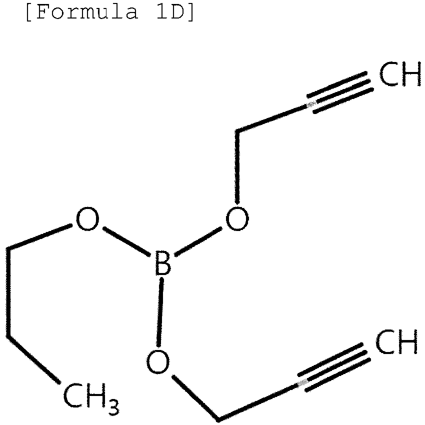

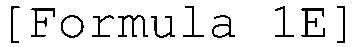

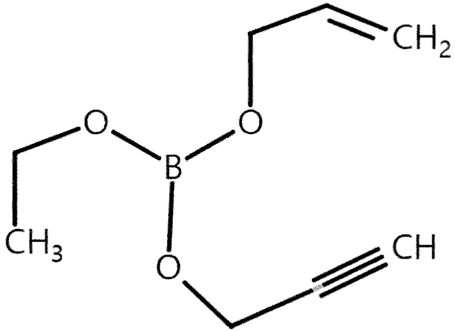

In a case in which the compound represented by Formula 3 below, in which all terminal groups are substituted with a triple bond structure (propargyl group) having a fast reaction rate, is included as the film-forming additive, since a radical reaction occurs rapidly due to electron cloud aggregation in the propargyl group while the reduction reaction rate of the film-forming additive excessively increases during operation and a random reaction resulting therefrom increases, a nonuniform film may be formed on surfaces of the positive electrode and the negative electrode. Thus, long-term durability of the lithium secondary battery becomes inferior.

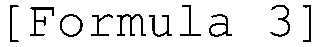

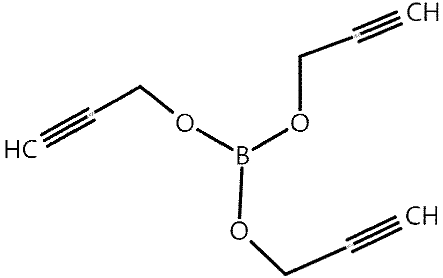

Also, in a case in which a compound represented by Formula 4 or 5 below containing one or more nitrile groups (-CN) at a terminal position is included as the film-forming additive, it becomes difficult to induce film formation by an oxidation reaction as the nitrile groups having high oxidation stability are adsorbed to the positive electrode active material. That is, with respect to the compound represented by Formula 4 or 5 below, since it has higher oxidation stability than the compound represented by Formula 1 containing a vinyl group and/or a propargyl group as a terminal group, it is difficult to induce an oxide film formation reaction and also, there is a disadvantage in that it is difficult to form a film with excellent coverage characteristics through a chain reaction (propagation) due to a film formation mechanism based on adsorption of a cyanide functional group.

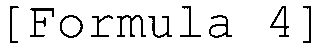

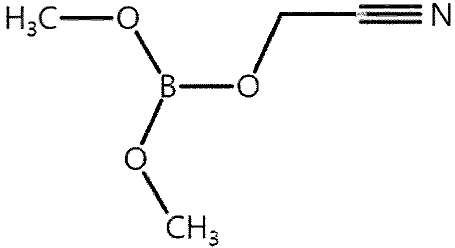

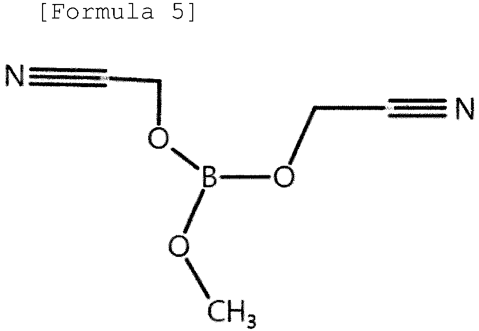

The film-forming additive may be included in an amount of 0.01 wt% or more, 0.05 wt% or more, 0.1 wt% or more, 0.3 wt% or more, 0.5 wt% or more, 0.7 wt% or more, 0.9 wt% or more, or 1.0 wt% or more based on the total weight of the solid content of the positive electrode slurry composition, and may also be included in an amount of 10 wt% or less, 8 wt% or less, 6 wt% or less, 5 wt% or less, 4 wt% or less, 3 wt% or less, or 2 wt% or less. In a case in which the amount of the film-forming additive satisfies the above range, the oxidative decomposition reaction between the positive electrode and the electrolyte may be suppressed by forming a robust film on the surface of the positive electrode while preventing a side reaction by the film-forming additive, the gas generation may be reduced, and the oxygen desorption from the positive electrode may be suppressed. The above numerical ranges may be combined with each other without limitation, and the film-forming additive may specifically be included in an amount range of 0.01 wt% to 10 wt%, 0.01 wt% to 8 wt%, or 0.1 wt% to 5 wt%. That is, in a case in which the amount of the film-forming additive is 0.01 wt% or more, a robust film may be formed on the surface of the positive electrode during battery operation time, and in a case in which the amount of the film-forming additive is 10 wt% or less, the side reaction caused by the film-forming additive may be prevented, and an increase in resistance caused by formation of a thick film on the surface of the positive electrode may be prevented.

### (3) Solvent

In the positive electrode slurry composition of the present disclosure, the solvent may be an organic solvent and/or an aqueous solvent that is commonly used in the art.

Specifically, the organic solvent may be at least one of N-methyl-2-pyrrolidone (NMP), dimethyl sulfoxide (DMSO), isopropyl alcohol, acetone, methoxy propyl acetate, butyl acetate, glycol acid, butyl ester, butyl glycol, methylalkylpolysiloxane, alkylbenzene, propylene glycol, xylene, monophenyl glycol, aralkyl-modified methylalkylpolysiloxane, polyether-modified dimethylpolysiloxane copolymer, polyether-modified dimethylpolysiloxane copolymer, polyacrylate, alkylbenzene, diisobutyl ketone, organic-modified polysiloxane, butanol, isobutanol, modified polyacrylate, modified polyurethane, and polysiloxane-modified polymer. Also, the aqueous solvent may include water.

An amount of the solvent used may be sufficient if the positive electrode slurry composition may be adjusted to have appropriate viscosity in consideration of a coating thickness of the positive electrode material mixture layer, manufacturing yield, and workability, and is not particularly limited.

The positive electrode slurry composition for a lithium secondary battery of the present disclosure may optionally additionally include at least one of a conductive agent, a binder, and a thickener, if necessary.

### (4) Conductive Agent

Specifically, the conductive agent is used to provide conductivity to the electrode, wherein any conductive agent may be used without particular limitation as long as it has suitable electron conductivity without causing adverse chemical changes in the battery. As specific examples of the conductive agent, carbon black such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used, and any one thereof or a mixture of two or more thereof may be used.

The conductive agent may be included in an amount of 0.1 wt% to 10.0 wt%, preferably, 0.1 wt% to 8.0 wt% based on the total weight of the solid content included in the positive electrode slurry composition. In a case in which the amount of the conductive agent satisfies the above range, conductivity of the positive electrode may be improved, and a reduction in flexibility of the positive electrode may be prevented.

### (5) Binder

The binder improves the adhesion between positive electrode active material particles and the adhesion between the positive electrode active material and a current collector. As an example of the binder, any one of a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder or a mixture of two or more thereof may be used.

The binder may be included in the positive electrode material mixture layer in an amount of 0.1 wt% to 15 wt%, preferably, 0.1 wt% to 10 wt% based on the total weight of the solid content of the positive electrode slurry composition. When the amount of the binder is at the above-described level, a reduction in capacity of the positive electrode may be prevented while a binding force of the positive electrode active material and the positive electrode collector may be sufficiently secured.

### (6) Thickener

Also, the thickener may ensure stability of the positive electrode slurry composition by providing appropriate viscosity to the positive electrode slurry composition, and may improve surface defects by alleviating a re-aggregation phenomenon among the solid contents when coating the positive electrode collector with the positive electrode slurry composition.

The thickener may include carboxymethyl cellulose (CMC).

The thickener may be included in an amount of 0.5 wt% to 5 wt% based on the total weight of the solid content of the positive electrode slurry composition. If the amount of the thickener is less than 0.5 wt%, since the positive electrode slurry composition flows down like water due to low viscosity of the positive electrode slurry composition, the positive electrode collector may not be coated with the positive electrode slurry composition, and if the amount of the thickener is greater than 5 wt%, since the positive electrode slurry composition becomes highly viscous, it may be difficult to form a uniform coating layer.

The viscosity of the positive electrode slurry composition of the present disclosure is not particularly limited, and may vary depending on the amount of the solid content in the composition, but, in consideration of ease of coating process and phase stability of the positive electrode slurry composition, the viscosity may be 1,000 cP or more or 4,500 cP or more at 25°C.

### Positive Electrode

Furthermore, the present disclosure includes a positive electrode, specifically, a positive electrode for a lithium secondary battery.

The positive electrode may include a positive electrode material mixture layer, and the positive electrode material mixture layer, for example, may be formed from the above-described positive electrode slurry composition.

Also, the positive electrode material mixture layer may include a positive electrode active material and a film-forming additive.

The positive electrode active material may be included in the positive electrode material mixture layer in an amount of 80 wt% to 98 wt%, more specifically, 85 wt% to 98 wt%.

The film-forming additive may be the compound represented by Formula 1.

In addition, since descriptions of the positive electrode active material and the film-forming additive overlap with those described above, the descriptions thereof will be omitted.

Furthermore, the positive electrode material mixture layer may optionally further include a binder, a conductive agent and/or a thickener, together with the positive electrode active material and the film-forming additive.

In a case in which the binder is included in the positive electrode material mixture layer, the binder may be included in the positive electrode material mixture layer in an amount of 0.1 wt% to 15 wt%, specifically, 0.1 wt% to 10 wt%.

In a case in which the conductive agent is included in the positive electrode material mixture layer, the conductive agent may be included in the positive electrode material mixture layer in an amount of 0.1 wt% to 10.0 wt%, preferably, 1.0 wt% to 8.0 wt%.

In a case in which the thickener is included in the positive electrode material mixture layer, the thickener may be included in the positive electrode material mixture layer in an amount of 0.5 wt% to 5 wt%.

In addition, since descriptions of the binder, the conductive agent, and the thickener overlap with those described above, the descriptions thereof will be omitted.

The positive electrode material mixture layer may have a thickness of 50 µm to 500 µm, specifically, 100 µm to 300 µm.

Specifically, the positive electrode of the present disclosure may include a boron (B) and oxygen-containing film disposed on a portion of a surface or an entire surface of the positive electrode material mixture layer. Specifically, while an oxygen component having a lone electron pair in the compound represented by Formula 1, as the film-forming additive, is stably adsorbed to the positive electrode during a formation process, a boron and oxygen-containing film with enhanced Li ion characteristics may be formed. Particularly, since a boron component included in the compound represented by Formula 1 reacts with the anions, for example, PF₆⁻ of the lithium salt to prevent further decomposition of the anions and thereby suppress the generation of HF, a film degradation phenomenon may be prevented.

In a case in which a total amount of the boron (B)-containing film satisfies the above range, high thermal safety of the positive electrode active material may be secured, and an effect of improving high-temperature life characteristics and resistance increase rate may be obtained.

The positive electrode may further include a positive electrode collector. Specifically, the positive electrode material mixture layer may be disposed on at least one surface, specifically, one surface or both surfaces of the positive electrode collector.

The positive electrode collector is not particularly limited as long as it has conductivity without causing chemical changes in the battery, and, for example, stainless steel, aluminum, nickel, titanium, fired carbon, or aluminum or stainless steel that is surface-treated with one of carbon, nickel, titanium, silver, or the like may be used.

Also, a thickness of the positive electrode collector is not particularly limited, and may be set within an appropriate range in consideration of mechanical strength of the positive electrode, productivity, or capacity of the battery. For example, the positive electrode collector may typically have a thickness of 3 µm to 500 µm. Furthermore, microscopic irregularities may be formed on the surface of the collector to improve the adhesion of a positive electrode material. The positive electrode collector, for example, may be used in various shapes such as that of a film, a sheet, a foil, a net, a porous body, a foam body, a non-woven fabric body, and the like.

The positive electrode of the present disclosure may be prepared according to a method of preparing a positive electrode which is known in the art. For example, the positive electrode of the present disclosure may be prepared by a method of preparing a positive electrode which includes the steps of: preparing a positive electrode slurry composition, and then applying the positive electrode slurry composition onto a positive electrode collector; and forming a positive electrode material mixture layer by drying and then rolling the positive electrode slurry composition. Also, the positive electrode of the present disclosure may be prepared by a method of preparing a positive electrode which includes the steps of: casting the positive electrode slurry composition on a separate support; and laminating a positive electrode material mixture layer film separated from the support on the positive electrode collector.

Specifically, the present disclosure provides a method of preparing a positive electrode for a secondary battery which includes the steps of:
coating a positive electrode slurry composition on a positive electrode collector; and
forming a positive electrode material mixture layer by drying and rolling the positive electrode slurry composition,
wherein the positive electrode slurry composition is the positive electrode slurry composition of the present disclosure.

According to the method of preparing a positive electrode for a secondary battery, since a film-forming additive is introduced into the positive electrode slurry composition in the positive electrode material mixture layer forming step, formation of a positive electrode film may be smoother than a case where the film-forming additive is introduced into the positive electrode by adding it to a non-aqueous electrolyte. Thus, the positive electrode prepared by the method of preparing a positive electrode and the secondary battery may have excellent high-temperature cycle life performance and high-temperature storage performance.

The drying temperature may be in a range of 80°C to 250°C.

### Lithium Secondary Battery

A lithium secondary battery according to the present disclosure may include the positive electrode of the present disclosure, a negative electrode, a separator, and an electrolyte solution.

Since descriptions of constituent materials and preparation method of the positive electrode of the present disclosure overlap with those described above, the descriptions thereof will be omitted and other components will be described below.

### (1) Negative Electrode

The negative electrode may face the positive electrode.

The negative electrode used in the lithium secondary battery of the present disclosure may include a negative electrode material mixture layer including a negative electrode active material and a conductive agent.

The negative electrode active material may include at least one selected from lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn), or an alloy of lithium and the metal may be used.

One selected from PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0 ≤x≤1), and SnₓMe₁₋ₓMe'_{y}O_{z} (Me: Mn, Fe, Pb, or Ge; Me': Al, boron (B), phosphorus (P), Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x<2), a Si-Y alloy (where Y is an element selected from alkali metal, alkaline earth metal, a Group 13 element, a Group 14 element, transition metal, a rare earth element, or a combination thereof, and is not Si), Sn, SnO₂, and Sn-Y (where Y is an element selected from alkali metal, alkaline earth metal, a Group 13 element, a Group 14 element, transition metal, a rare earth element, or a combination thereof, and is not Sn), and a mixture of SiO₂ and at least one thereof may also be used. The element Y may be selected from Mg, Ca, Sr, Ba, Ra, scandium (Sc), yttrium (Y), Ti, Zr, hafnium (Hf), rutherfordium (Rf), V, niobium (Nb), Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, Ge, P, arsenic (As), Sb, bismuth (Bi), sulfur (S), selenium (Se), tellurium (Te), polonium (Po), or a combination thereof.

The transition metal oxide may include lithium-containing titanium composite oxide (LTO), vanadium oxide, and lithium vanadium oxide.

According to an embodiment, the negative electrode active material may be used by including a carbon-based negative electrode active material or a silicon-based negative electrode active material together with the carbon-based negative electrode active material.

The negative electrode active material may be included in an amount of 80 wt% to 99 wt% based on a total weight of the negative electrode material mixture layer. In a case in which the amount of the negative electrode active material satisfies the above range, excellent capacity characteristics and electrochemical properties may be obtained.

The conductive agent may be included in the negative electrode material mixture layer in an amount of about 0.01 wt% to 2.0 wt%, particularly 0.01 wt% to 1.5 wt%, and more particularly 0.01 wt% to 1.0 wt% based on the total weight of the negative electrode material mixture layer. In a case in which the amount of the conductive agent is 0.01 wt% or more, conductivity between the active materials may be sufficiently secured, and in a case in which the amount of the conductive agent is 2.0 wt% or less, a lithium secondary battery capable of securing excellent high capacity may be prepared by increasing the amount of the negative electrode active material included in the negative electrode material mixture layer.

The negative electrode material mixture layer may further include a binder.

The binder is a component that assists in the binding between the conductive agent, the active material, and the current collector, wherein examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The binder may be included in the negative electrode material mixture layer in an amount of 0.1 wt% to 15.0 wt%, preferably, 0.1 wt% to 10.0 wt% based on the total weight of the negative electrode material mixture layer.

The negative electrode may further include a negative electrode collector. Specifically, the negative electrode material mixture layer may be disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, or an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of the negative electrode active material. For example, the negative electrode collector may be used in various shapes such as that of a film, a sheet, a foil, a net, a porous body, a foam body, a non-woven fabric body, and the like.

The negative electrode may be prepared according to a method of preparing a negative electrode which is known in the art. For example, the negative electrode may be prepared by forming a negative electrode material mixture layer by applying a negative electrode slurry, which is prepared by dissolving or dispersing the carbon-based active material and the negative electrode conductive agent as well as optionally the binder in a solvent, onto the negative electrode collector, rolling and drying the coated negative electrode collector, or may be prepared by casting the negative electrode slurry on a support and then laminating a negative electrode material mixture layer film separated from the support on the negative electrode collector.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have an appropriate viscosity in consideration of a coating thickness of a negative electrode material mixture, manufacturing yield, and workability, and is not particularly limited.

### (2) Separator

The separator may be disposed between the positive electrode and the negative electrode.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

### (3) Electrolyte Solution

The electrolyte solution included in the lithium secondary battery according to the present disclosure may be a non-aqueous electrolyte. Specifically, the non-aqueous electrolyte may include a lithium salt, a non-aqueous organic solvent, and an additive.

### (3-1) Lithium Salt

First, any lithium salt typically used in an electrolyte for a lithium secondary battery may be used as the lithium salt without limitation, and, for example, the lithium salt may include Li⁺ as a cation, and may include at least one selected from F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, or SCN⁻ as an anion.

Specifically, the lithium salt may include a single material selected from LiCl, LiBr, LiI, LiBF₄, LiClO₄, LiB₁₀Cl₁₀, LiAlCl₄, LiAlO₄, LiPF₆, LiCF₃SO₃, LiCH₃CO₂, LiCF₃CO₂, LiAsF₆, LiSbF₆, LiCH₃SO₃, LiN(SO₂F)₂ (Lithium bis(fluorosulfonyl)imide, LiFSI), LiN(SO₂CF₂CF₃)₂ (lithium bis(pentafluoroethanesulfonyl)imide, LiBETI), and LiN(SO₂CF₃)₂ (lithium bis(trifluoromethanesulfonyl)imide, LiTFSI) or a mixture of two or more thereof, and may specifically include at least one selected from LiBF₄, LiPF₆, LiN(SO₂F)₂ (Lithium bis (fluorosulfonyl) imide, LiFSI), LiN(SO₂CF₂CF₃)₂ (lithium bis(pentafluoroethanesulfonyl)imide, LiBETI), or LiN(SO₂CF₃)₂ (lithium bis(trifluoromethane sulfonyl)imide, LiTFSI). A lithium salt typically used in an electrolyte of a lithium secondary battery may be used without limitation in addition to the above-described lithium salt.

The lithium salt may be appropriately changed in a normally usable range, but may be included in a concentration of 0.8 M to 3.0 M, specifically, 1.0 M to 2.0 M, preferably, 1.0 M to 1.8 M in the electrolyte to obtain an optimum effect of forming a film for preventing corrosion of the surface of the electrode.

In a case in which the concentration of the lithium salt is within the above range, viscosity of the non-aqueous electrolyte may be controlled to achieve optimal impregnability, and mobility of lithium ions may be improved to obtain an effect of improving capacity characteristics and cycle characteristics of the lithium secondary battery.

### (3-2) Non-Aqueous Organic Solvent

Also, a description of the non-aqueous organic solvent is as follows.

Various organic solvents typically used in a non-aqueous electrolyte may be used as the non-aqueous organic solvent without limitation, wherein a type thereof is not limited as long as decomposition due to an oxidation reaction during charge and discharge of the secondary battery may be minimized and desired properties may be exhibited together with an additive.

Specifically, the non-aqueous organic solvent may include at least one of a cyclic carbonate-based organic solvent and a linear carbonate-based organic solvent to secure high ionic conductivity.

The cyclic carbonate-based organic solvent is a highly viscous organic solvent which well dissociates the lithium salt in the non-aqueous electrolyte due to high permittivity, wherein specific examples of the cyclic carbonate-based organic solvent may be at least one organic solvent selected from ethylene carbonate (EC), propylene carbonate (PC), 1,2-butylene carbonate, 2,3-butylene carbonate, 1,2-pentylene carbonate, 2,3-pentylene carbonate, or vinylene carbonate, and, among them, the cyclic carbonate-based organic solvent may include at least one of ethylene carbonate (EC) and propylene carbonate (PC).

The linear carbonate-based organic solvent is an organic solvent having low viscosity and low permittivity, wherein as a specific example, the linear carbonate-based organic solvent may include at least one selected from dimethyl carbonate (DMC), diethyl carbonate (DEC), dipropyl carbonate, ethyl methyl carbonate (EMC), methylpropyl carbonate, or ethylpropyl carbonate, and the linear carbonate-based organic solvent may specifically include at least one of dimethyl carbonate, ethyl methyl carbonate, and diethyl carbonate.

In the present disclosure, in order to ensure high ionic conductivity, the cyclic carbonate-based compound and the linear carbonate-based compound may be mixed and used as the non-aqueous organic solvent, and, in this case, the cyclic carbonate-based compound and the linear carbonate-based compound may be mixed in a volume ratio of 10:90 to 50:50 and used, or may be mixed in a volume ratio of 10:90 to 40:60 and used.

If necessary, the non-aqueous organic solvent may additionally include a linear ester-based organic solvent having a lower melting point and higher stability at high temperatures than the cyclic carbonate-based organic solvent.

As a specific example, the linear ester-based organic solvent may include at least one organic solvent selected from methyl acetate, ethyl acetate, propyl acetate, methyl propionate, ethyl propionate, propyl propionate, or butyl propionate, and may preferably be at least one of ethyl propionate and propyl propionate.

A remainder excluding the lithium salt and the additive in the non-aqueous electrolyte of the present disclosure may all include the non-aqueous organic solvent unless otherwise stated.

### (3-3) Additive

Next, the non-aqueous electrolyte of the present disclosure may include an additive in order to prevent the occurrence of collapse of the negative electrode due to the decomposition of the non-aqueous electrolyte in a high power environment and to simultaneously improve low-temperature high rate discharge characteristics, high-temperature stability, overcharge prevention, and an effect of suppressing battery swelling at high temperature by forming a robust film on the surface of the negative electrode.

As a specific example, the additive may further include at least one selected from a cyclic carbonate-based compound, a fluorinated cyclic carbonate-based compound, a sultone-based compound, a sulfate-based compound, a phosphate-based compound, a nitrile-based compound, a benzene-based compound, an amine-based compound, or a silane-based compound.

The cyclic carbonate-based compound may include vinylene carbonate (VC) or vinyl ethylene carbonate. The cyclic carbonate-based compound may be included in an amount of 1.0 wt% to 10 wt%, specifically, 1.0 wt% to 5.0 wt% based on a total weight of the non-aqueous electrolyte. In a case in which the amount of the cyclic carbonate-based compound satisfies the above range, low-temperature output, high-temperature storage characteristics, and high-temperature life characteristics of the battery may be effectively improved while suppressing the side reaction.

Also, the fluorinated cyclic carbonate-based compound may include fluoroethylene carbonate (FEC). Since the fluoroethylene carbonate (FEC) minimizes damage to a solid electrolyte interphase (SEI) film during high-voltage charge and discharge by forming a robust film containing a polymer component on the surface of the negative electrode, it may prevent degradation of the negative electrode. The fluorinated cyclic carbonate-based compound may be included in an amount of 500 parts by weight to 1,000 parts by weight based on 100 parts by weight of a total amount of lithium difluorophosphate (LiDFP) and hexamethylene diisocyanate. In a case in which the amount of the fluorinated cyclic carbonate-based compound satisfies the above range, the degradation of the positive electrode and the negative electrodes during high-voltage charge and high-temperature storage may be effectively prevented by forming a robust film on the surfaces of the positive electrode and the negative electrodes while preventing a side reaction due to the additives remaining without being decomposed.

Furthermore, the sultone-based compound may include at least one compound selected from 1,3-propane sultone (PS), 1,4-butane sultone, ethane sultone, 1,3-propene sultone (PRS), 1,4-butene sultone, or 1-methyl-1,3-propene sultone, and may preferably include 1,3-propane sultone (PS). Since the sultone-based compound prevents a side reaction between the negative electrode and the electrolyte solution at high temperatures by forming a stable SEI film by a reduction reaction on the surface of the negative electrode, it may suppress gas generation and may achieve an effect of increasing durability during high-temperature storage. The sultone-based compound may be included in an amount of 1.0 wt% to 10 wt%, specifically, 1.0 wt% to 5.0 wt% based on the total weight of the non-aqueous electrolyte. In a case in which the amount of the sultone-based compound satisfies the above range, the degradation of the positive electrode and the negative electrodes during high-voltage charge and high-temperature storage may be effectively prevented by forming a robust film on the surfaces of the positive electrode and the negative electrode.

Also, the sulfate-based compound may include ethylene sulfate (Esa), trimethylene sulfate (TMS), or methyl trimethylene sulfate (MTMS). The sulfate-based compound may be included in an amount of 0.01 wt% to 10 wt%, specifically, 0.05 wt% to 5.0 wt% based on the total weight of the non-aqueous electrolyte. If the amount of the sulfate-based compound satisfies the above range, it may achieve an excellent effect of improving life characteristics by suppressing the side reaction in the electrolyte during charge and discharge of the battery and forming a robust SEI film.

The phosphate-based compound may include at least one compound selected from lithium difluoro(bisoxalato)phosphate, lithium difluorophosphate (LiDFP), tris(trimethylsilyl)phosphate, tris(2,2,2-trifluoroethyl)phosphate, or tris(trifluoroethyl)phosphate. The phosphate-based compound may be included in an amount of 0.01 wt% to 10 wt%, specifically, 0.05 wt% to 5.0 wt% based on the total weight of the non-aqueous electrolyte. In a case in which the amount of the phosphate-based compound satisfies the above range, an effect of improving low-temperature output, high-temperature storage characteristics, and high-temperature life characteristics of the battery may be obtained by forming a robust SEI film.

Furthermore, the nitrile-based compound may include at least one compound selected from succinonitrile, hexane tricyanide (HTCN), adiponitrile, acetonitrile, propionitrile, butyronitrile, valeronitrile, caprylonitrile, heptanenitrile, hexamethylene diisocyanate, 2-fluorobenzonitrile, 4-fluorobenzonitrile, difluorobenzonitrile, trifluorobenzonitrile, phenylacetonitrile, 2-fluorophenylacetonitrile, or 4-fluorophenylacetonitrile.

The nitrile-based compound may be included in an amount of 1.0 wt% to 10 wt%, specifically, 1.0 wt% to 5.0 wt% based on the total weight of the non-aqueous electrolyte. In a case in which the amount of the nitrile-based compound satisfies the above range, it may suppress generation of gas generated by the side reaction between the positive electrode and the electrolyte solution and may effectively suppress dissolution of metallic foreign matter by forming a stable film on the surfaces of the negative electrode and the positive electrode.

The benzene-based compound may include fluorobenzene. The benzene-based compound may be included in an amount of 0.01 wt% to 10 wt%, specifically, 0.05 wt% to 5.0 wt% based on the total weight of the non-aqueous electrolyte.

The amine-based compound may include triethanolamine or ethylenediamine. The amine-based compound may be included in an amount of 0.01 wt% to 10 wt%, specifically, 0.05 wt% to 5.0 wt% based on the total weight of the non-aqueous electrolyte.

The silane-based compound may include tetravinylsilane. The silane-based compound may be included in an amount of 0.01 wt% to 10 wt%, specifically, 0.05 wt% to 5.0 wt% based on the total weight of the non-aqueous electrolyte.

The lithium secondary battery may include an electrode assembly including the positive electrode, the negative electrode, and a separator disposed between the positive electrode and the negative electrode; and the electrolyte solution. The lithium secondary battery may include a battery case, and in this case, the electrode assembly and the electrolyte solution may be accommodated in the battery case.

The lithium secondary battery according to the present disclosure as described above may be suitably used in portable devices, such as mobile phones, notebook computers, and digital cameras, and electric cars such as a hybrid electric vehicle (HEV).

A shape of the lithium secondary battery of the present disclosure is not particularly limited, but a cylindrical type using a can, a prismatic type, a pouch type, or a coin type may be used.

The lithium secondary battery according to the present disclosure may not only be used in a battery cell that is used as a power source of a small device, but may also be preferably used as a unit cell in a medium and large sized battery module including a plurality of battery cells.

Hereinafter, the present disclosure will be described in more detail according to examples. However, the invention may be embodied in many different forms and should not be construed as being limited to the embodiments set forth herein. Rather, these example embodiments are provided so that this description will be thorough and complete, and will fully convey the scope of the present disclosure to those skilled in the art.

### [Examples]

### Example 1.

### (Positive Electrode Preparation)

After a positive electrode active material (Li(Ni_{0.6} Mn_{0.3}Co_{0.1})O₂), a conductive agent (carbon nanotubes), a binder (PVDF), and a thickener (CMC) were dissolved in N-methylpyrrolidone (NMP) in a weight ratio of 97.0:1.20:1.44:0.36, the compound represented by Formula 1A was added as a film-forming additive such that an amount of the compound represented by Formula 1A was 0.01 wt% to prepare a positive electrode slurry composition. A 12 µm thick aluminum (Al) foil current collector was coated with the prepared positive electrode slurry composition, dried at 50°C for 2 hours, and pressed to prepare a positive electrode having a positive electrode material mixture layer formed thereon.

### (Negative Electrode Preparation)

A negative electrode active material (graphite and SiC = 95:5 weight ratio), a binder (SBR), and bundle-type single-walled carbon nanotubes (SWCNT, length: 7 µm, specific surface area: 1,000 m²/g, manufacturer: ANP) having an average diameter of 10 nm, as a conductive agent, were added to distilled water in a weight ratio of 96.84:3.15:0.01 to prepare a negative electrode active material slurry. A 15 µm thick copper current collector was coated with the above-prepared negative electrode active material slurry, dried, and then rolled to prepare a negative electrode (see Table 1 below).

### (Non-Aqueous Electrolyte Preparation)

After LiPF₆ was dissolved in a non-aqueous solvent, in which ethylene carbonate (EC), ethyl methyl carbonate (EMC), and diethyl carbonate (DEC) were mixed in a volume ratio of 2:7:1, such that a concentration of the LiPF₆ was 1.2 M, a non-aqueous electrolyte was prepared by adding 0.5 wt% of vinylene carbonate.

### (Secondary Battery Preparation)

After disposing a porous polypropylene separator between the prepared positive electrode and negative electrode to prepare an electrode assembly, the electrode assembly was accommodated in a battery case, and the above-prepared non-aqueous electrolyte was injected to prepare a lithium secondary battery.

### Example 2.

### (Positive Electrode Preparation)

After a positive electrode active material (Li(Ni_{0.6} Mn_{0.3}Co_{0.1})O₂), a conductive agent (carbon nanotubes), a binder (PVDF), and a thickener (CMC) were dissolved in N-methylpyrrolidone (NMP) in a weight ratio of 97.0:1.20:1.44:0.36, the compound represented by Formula 1A was added as a film-forming additive such that an amount of the compound represented by Formula 1A was 10.0 wt% to prepare a positive electrode slurry composition. A 12 µm thick aluminum (Al) foil current collector was coated with the prepared positive electrode slurry composition, dried at 50°C for 2 hours, and pressed to prepare a positive electrode having a positive electrode material mixture layer formed thereon.

### (Secondary Battery Preparation)

A lithium secondary battery was prepared in the same manner as in Example 1 except that the above positive electrode was used.

### Example 3.

### (Positive Electrode Preparation)

After a positive electrode active material (Li(Ni_{0.6} Mn_{0.3}Co_{0.1})O₂), a conductive agent (carbon nanotubes), a binder (PVDF), and a thickener (CMC) were dissolved in N-methylpyrrolidone (NMP) in a weight ratio of 97.0:1.20:1.44:0.36, the compound represented by Formula 1A was added as a film-forming additive such that an amount of the compound represented by Formula 1A was 1.0 wt% to prepare a positive electrode slurry composition. A 12 µm thick aluminum (Al) foil current collector was coated with the prepared positive electrode slurry composition, dried at 50°C for 2 hours, and pressed to prepare a positive electrode having a positive electrode material mixture layer formed thereon.

### (Secondary Battery Preparation)

A lithium secondary battery was prepared in the same manner as in Example 1 except that the above positive electrode was used.

### Example 4.

A positive electrode and a lithium secondary battery were prepared in the same manner as in Example 3 except that when preparing a positive electrode slurry composition, the compound represented by Formula 1B was included as a film-forming additive in the positive electrode slurry composition instead of the compound represented by Formula 1A.

### Example 5.

A positive electrode and a lithium secondary battery were prepared in the same manner as in Example 3 except that when preparing a positive electrode slurry composition, the compound represented by Formula 1C was included as a film-forming additive in the positive electrode slurry composition instead of the compound represented by Formula 1A.

### Example 6.

A positive electrode and a lithium secondary battery were prepared in the same manner as in Example 3 except that when preparing a positive electrode slurry composition, the compound represented by Formula 1D was included as a film-forming additive in the positive electrode slurry composition instead of the compound represented by Formula 1A.

### Example 7.

A positive electrode and a lithium secondary battery were prepared in the same manner as in Example 3 except that when preparing a positive electrode slurry composition, the compound represented by Formula 1E was included as a film-forming additive in the positive electrode slurry composition instead of the compound represented by Formula 1A.

### Example 8.

A positive electrode and a lithium secondary battery were prepared in the same manner as in Example 3 except that when preparing a positive electrode slurry composition, 5.0 wt% of the compound represented by Formula 1A was included as a film-forming additive in the positive electrode slurry composition.

### Example 9.

A positive electrode and a lithium secondary battery were prepared in the same manner as in Example 3 except that when preparing a positive electrode slurry composition, 8.0 wt% of the compound represented by Formula 1A was included as a film-forming additive in the positive electrode slurry composition.

### Comparative Example 1.

### (Positive Electrode Preparation)

A positive electrode active material (Li (Ni_{0.6} Mn_{0.3}Co_{0.1})O₂), a conductive agent (carbon black), a binder (PVDF), and a thickener (CMC) were added to N-methylpyrrolidone (NMP) in a weight ratio of 92:5:2:1 to prepare a positive electrode slurry composition. A 12 µm thick aluminum (Al) foil current collector was coated with the above-prepared positive electrode slurry composition, dried at 50°C for 2 hours, and pressed to prepare a positive electrode having a positive electrode material mixture layer formed thereon.

### (Secondary Battery Preparation)

A lithium secondary battery was prepared in the same manner as in Example 1 except that the above positive electrode was used.

### Comparative Example 2.

### (Non-Aqueous Electrolyte Preparation)

After LiPF₆ was dissolved in a non-aqueous solvent, in which ethylene carbonate (EC), ethyl methyl carbonate (EMC), and diethyl carbonate (DEC) were mixed in a volume ratio of 2:7:1, such that a concentration of the LiPF₆ was 1.2 M, a non-aqueous electrolyte was prepared by adding 1.0 wt% of the compound represented by Formula 1A and 0.5 wt% of vinylene carbonate.

### (Secondary Battery Preparation)

A lithium secondary battery was prepared in the same manner as in Example 1 except that the above non-aqueous electrolyte was injected.

### Comparative Example 3.

A positive electrode and a lithium secondary battery were prepared in the same manner as in Example 3 except that when preparing a positive electrode slurry composition, the compound represented by Formula 3 was included as a film-forming additive in the positive electrode slurry composition instead of the compound represented by Formula 1A.

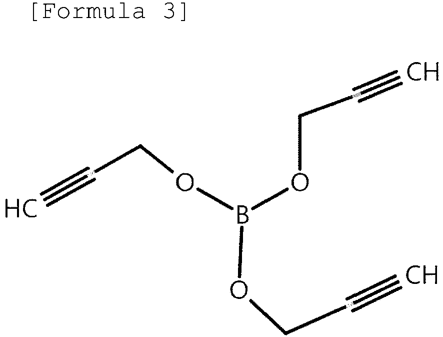

### Comparative Example 4.

A positive electrode and a lithium secondary battery were prepared in the same manner as in Example 3 except that when preparing a positive electrode slurry composition, the compound represented by Formula 4 was included as a film-forming additive in the positive electrode slurry composition instead of the compound represented by Formula 1A.

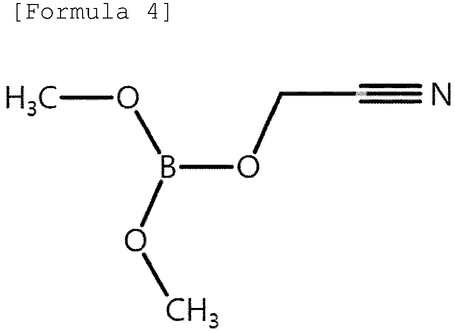

### Comparative Example 5.

A positive electrode and a lithium secondary battery were prepared in the same manner as in Example 3 except that when preparing a positive electrode slurry composition, the compound represented by Formula 5 was included as a film-forming additive in the positive electrode slurry composition instead of the compound represented by Formula 1A.

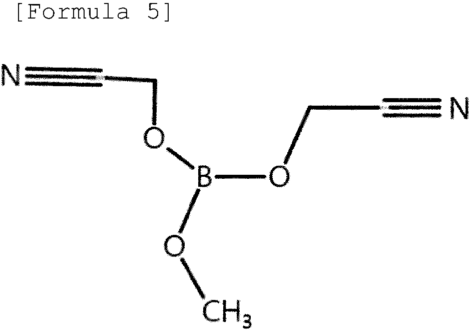

### Experimental Examples

### Experimental Example 1. High-temperature Cycle Characteristics Evaluation

After each of the lithium secondary batteries prepared in Examples 1 to 9 and the lithium secondary batteries prepared in Comparative Examples 1 to 5 was charged at 0.33 C rate to 4.5 V under constant current/constant voltage conditions at room temperature (25°C) and discharged at 0.33 C rate for 10 seconds, initial capacity was measured using PNE-0506 charge/discharge equipment (manufacturer: PNE solution).

Then, after high-voltage charging of each lithium secondary battery at 0.33 C rate to 4.5 V under constant current/constant voltage conditions at a high temperature (45°C) and discharging of each lithium secondary battery at 0.33 C rate to 2.5 V under constant current conditions were set as one cycle and 400 cycles were performed, a capacity retention, a resistance increase rate, and a gas generation amount were measured, and the results thereof are presented in Table 1 below.

**[Table 1]**

| | After 400 cycles | | |
|---|---|---|---|
| | Capacity retention (%) | Resistance increase rate (%) | Gas generation amount (µℓ) |
| Example 1 | 84.8 | 26.8 | 5,100 |
| Example 2 | 85.0 | 27.1 | 5,095 |
| Example 3 | 85.8 | 26.1 | 5,040 |
| Example 4 | 85.9 | 26.3 | 5,090 |
| Example 5 | 85.5 | 25.8 | 5,000 |
| Example 6 | 85.6 | 26.7 | 5,090 |
| Example 7 | 85.8 | 26.5 | 5,075 |
| Example 8 | 85.9 | 26.0 | 5,030 |
| Example 9 | 85.5 | 26.6 | 5,085 |
| Comparative Example 1 | 42.5 | 64.5 | 13,800 |
| Comparative Example 2 | 52.4 | 53.3 | 12,700 |
| Comparative Example 3 | 67.4 | 47.3 | 10,300 |
| Comparative Example 4 | 62.8 | 68.7 | 9,580 |
| Comparative Example 5 | 68.4 | 77.5 | 9, 905 |

Referring to Table 1, with respect to the lithium secondary batteries of Examples 1 to 9 of the present disclosure, it may be confirmed that capacity retention (%), resistance increase rate, and gas generation amount after high-temperature cycles were significantly improved in comparison to those of the lithium secondary batteries of Comparative Examples 1 to 5.

### Experimental Example 2. High-temperature Storage Characteristics Evaluation

After each of the lithium secondary batteries prepared in Examples 1 to 9 and the lithium secondary batteries prepared in Comparative Examples 1 to 5 was charged at 0.33 C rate to 4.5 V under constant current/constant voltage conditions at room temperature (25°C) and discharged at 0.33 C rate for 10 seconds, initial capacity was measured using PNE-0506 charge/discharge equipment (manufacturer: PNE solution).

Then, after each lithium secondary battery was stored at a high temperature (60°C) for 16 weeks, one cycle of charging of each lithium secondary battery at 0.33 C rate to 4.5 V under constant current/constant voltage conditions and discharging of each lithium secondary battery at 0.33 C rate to 2.5 V under constant current conditions was performed, a capacity retention, a resistance increase rate, and a gas generation amount were then measured, and the results thereof are presented in Table 2 below.

**[Table 2]**

| | After high-temperature (65°C) storage | | |
|---|---|---|---|
| | Capacity retention (%) | Resistance increase rate (%) | Gas generation amount (µℓ) |
| Example 1 | 88.9 | 31.2 | 4,395 |
| Example 2 | 88.8 | 31.0 | 4,400 |
| Example 3 | 89.8 | 30.2 | 4,325 |
| Example 4 | 89.9 | 30.1 | 4,355 |
| Example 5 | 89.2 | 30.5 | 4,335 |
| Example 6 | 89.9 | 30.9 | 4,315 |
| Example 7 | 89.5 | 30.8 | 4,295 |
| Example 8 | 89.9 | 30.0 | 4,300 |
| Example 9 | 89.5 | 30.1 | 4,385 |
| Comparative Example 1 | 54.2 | 72.4 | 15,200 |
| Comparative Example 2 | 65.9 | 61.8 | 13,300 |
| Comparative Example 3 | 69.4 | 50.3 | 9,800 |
| Comparative Example 4 | 55.7 | 88.2 | 10,860 |
| Comparative Example 5 | 59.5 | 97.5 | 11,050 |

Referring to Table 2, with respect to the lithium secondary batteries of Examples 1 to 9 of the present disclosure, it may be confirmed that capacity retention (%), resistance increase rate, and gas generation amount after high-temperature storage were significantly improved in comparison to those of the lithium secondary batteries of Comparative Examples 1 to 5.

### Experimental Example 3. Hot Box Evaluation

Each of the lithium secondary batteries prepared in Examples 1 to 9 and the lithium secondary batteries prepared in Comparative Examples 1 to 5 was fully charged to a state of charge (SOC) of 100%, the fully-charged battery cells were stored in a box, and, after internal temperature of the box was increased from room temperature to 150°C at 2°C/min, whether or not the stored lithium secondary batteries were ignited was confirmed while storing each lithium secondary battery at 150°C for 120 minutes and the results thereof are presented in Table 3 below. In Table 3 below, a case, in which the lithium secondary battery was ignited, was indicated as Fail, and a case, in which the lithium secondary battery was not ignited, was indicated as Pass.

**[Table 3]**

| | Hot box evaluation |
|---|---|
| Example 1 | Pass |
| Example 2 | Pass |
| Example 3 | Pass |
| Example 4 | Pass |
| Example 5 | Pass |
| Example 6 | Pass |
| Example 7 | Pass |
| Example 8 | Pass |
| Example 9 | Pass |
| Comparative Example 1 | Fail |
| Comparative Example 2 | Fail |
| Comparative Example 3 | Fail |
| Comparative Example 4 | Fail |
| Comparative Example 5 | Fail |

Referring to Table 3, it may be understood that the lithium secondary batteries prepared in Examples 1 to 9 of the present disclosure were not ignited even during high-temperature storage. In contrast, it may be understood that most of the lithium secondary batteries prepared in Comparative Examples 1 to 5 were ignited during high- temperature storage.

## Claims

1. A positive electrode slurry composition for a lithium secondary battery, the positive electrode slurry composition comprising a positive electrode active material, a film-forming additive, and a solvent,
wherein the film-forming additive is a compound represented by Formula 1: 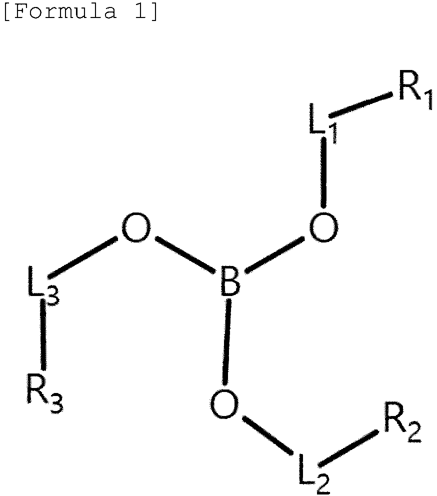 wherein, in Formula 1,
L₁, L₂, and L₃ are each independently a direct bond or an alkylene group having 1 to 10 carbon atoms,
R₁ and R₂ are each independently an alkenyl group having 2 to 7 carbon atoms or an alkynyl group having 2 to 7 carbon atoms,
R₃ is an alkyl group having 1 to 5 carbon atoms or an alkenyl group having 2 to 7 carbon atoms, and
when both R₁ and R₂ are alkynyl groups having 2 to 7 carbon atoms, R₃ is an alkyl group having 1 to 5 carbon atoms.

2. The positive electrode slurry composition for a lithium secondary battery of claim 1, wherein, in Formula 1, L₁, L₂, and L₃ are each independently a direct bond or an alkylene group having 1 to 5 carbon atoms, R₁ and R₂ are each independently an alkenyl group having 2 to 5 carbon atoms or an alkynyl group having 2 to 5 carbon atoms, and R₃ is an alkyl group having 1 to 4 carbon atoms or an alkenyl group having 2 to 5 carbon atoms.

3. The positive electrode slurry composition for a lithium secondary battery of claim 1, wherein, in Formula 1, L₁, L₂, and L₃ are each independently an alkylene group having 1 to 3 carbon atoms, R₁ and R₂ are each independently an alkenyl group having 2 to 5 carbon atoms, and R₃ is an alkenyl group having 2 to 5 carbon atoms.

4. The positive electrode slurry composition for a lithium secondary battery of claim 3, wherein, in Formula 1, L₁, L₂, and L₃ are each independently an alkylene group having 1 to 3 carbon atoms, R₁ and R₂ are each independently an alkenyl group having 2 to 4 carbon atoms, and R₃ is an alkenyl group having 2 to 4 carbon atoms.

5. The positive electrode slurry composition for a lithium secondary battery of claim 1, wherein, in Formula 1, L₁, L₂, and L₃ are each independently an alkylene group having 1 to 3 carbon atoms, R₁ and R₂ are each independently an alkynyl group having 2 to 5 carbon atoms, and R₃ is an alkyl group having 1 to 3 carbon atoms.

6. The positive electrode slurry composition for a lithium secondary battery of claim 5, wherein, in Formula 1, L₁, L₂, and L₃ are a direct bond or an alkylene group having 1 to 3 carbon atoms, R₁ and R₂ are an alkynyl group having 2 to 4 carbon atoms, and R₃ is an alkyl group having 1 to 3 carbon atoms.

7. The positive electrode slurry composition for a lithium secondary battery of claim 1, wherein the compound represented by Formula 1 is any one of compounds represented by Formulae 1A to 1E: 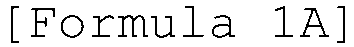 =

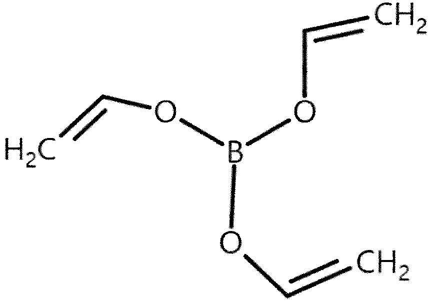

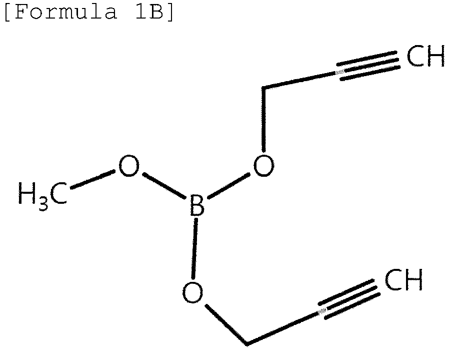

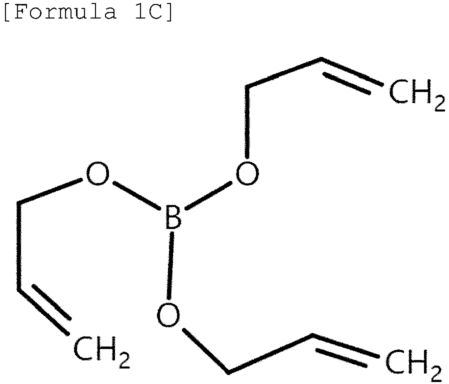

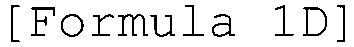

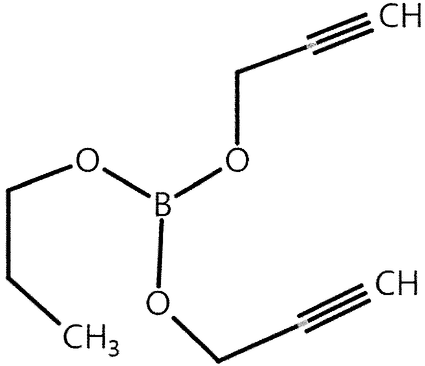

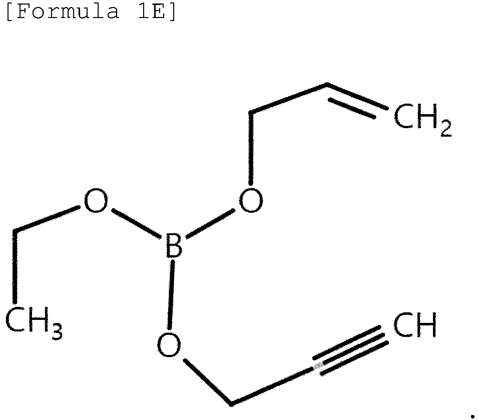

8. The positive electrode slurry composition for a lithium secondary battery of claim 1, wherein the film-forming additive is included in an amount of 0.01 wt% to 10 wt% based on a total weight of a solid content of the positive electrode slurry composition.

9. The positive electrode slurry composition for a lithium secondary battery of claim 1, wherein the film-forming additive is included in an amount of 0.01 wt% to 8 wt% based on a total weight of a solid content of the positive electrode slurry composition.

10. The positive electrode slurry composition for a lithium secondary battery of claim 1, wherein the positive electrode active material comprises a compound represented by Formula 2.
[Formula 2] Li₁₊ₐNiₓCo_{y}M¹_{z}M²_{w}O₂
wherein, in Formula 2,
M¹ is manganese (Mn), aluminum (Al), or a combination thereof,
M² is at least one selected from Al, zirconium (Zr), tungsten (W), titanium (Ti), magnesium (Mg), calcium (Ca), or strontium (Sr), and 0≤a≤0.5, 0<x<1.0, 0<y≤0.4, 0<z≤0.4, and 0≤w≤0.1.

11. The positive electrode slurry composition for a lithium secondary battery of claim 1, further comprising at least one of a conductive agent, a binder, and a thickener.

12. A positive electrode for a lithium secondary battery, the positive electrode comprising a positive electrode material mixture layer including a positive electrode active material and a film-forming additive, wherein the film-forming additive is a compound represented by Formula 1: 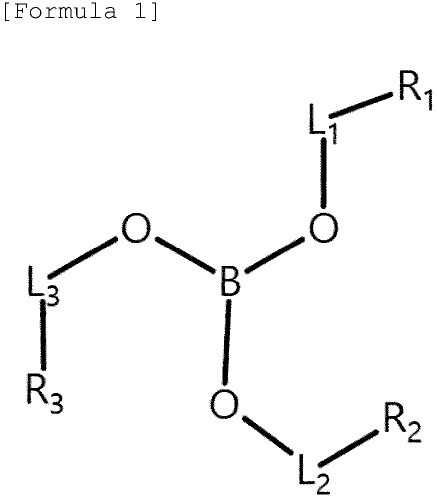 wherein, in Formula 1,
L₁, L₂, and L₃ are each independently a direct bond or an alkylene group having 1 to 10 carbon atoms,
R₁ and R₂ are each independently an alkenyl group having 2 to 7 carbon atoms or an alkynyl group having 2 to 7 carbon atoms,
R₃ is an alkyl group having 1 to 5 carbon atoms or an alkenyl group having 2 to 7 carbon atoms, and
when both R₁ and R₂ are alkynyl groups having 2 to 7 carbon atoms, R₃ is an alkyl group having 1 to 5 carbon atoms.

13. The positive electrode for a lithium secondary battery of claim 12, wherein the positive electrode material mixture layer comprises a boron (B)-containing film.

14. A method of preparing a positive electrode for a secondary battery, the method comprising:
applying a positive electrode slurry composition onto a positive electrode collector; and
forming a positive electrode material mixture layer by drying and rolling the positive electrode slurry composition,
wherein the positive electrode slurry composition is the positive electrode slurry composition of claim 1.

15. A lithium secondary battery comprising the positive electrode of claim 12, a negative electrode facing the positive electrode, a separator, and an electrolyte solution.
